# EUROPEAN PATENT APPLICATION

(11) **EP 3 474 061 A1**
(43) Date of publication of application: **24.04.2019**
(21) Application number: 17275166.1
(22) Date of filing: 19.10.2017
(51) Int. Cl.: G02B 26/08, G03B 21/00, H04N 9/31, G02B 27/01, G02B 27/00

(54) **AXIALLY ASYMMETRIC IMAGE SOURCE FOR HEAD-UP DISPLAYS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An image projection system (11, 12) utilising a digital mirror device with pivotable mirrors and an axially asymmetric angular illumination of the mirrors.

## Description

This disclosure relates to head up displays, and in particular image sources for such displays.

Head up displays utilise a transparent component, which the user looks through, to overlay an image on the user's actual view of the surroundings. The user's eye receives light from those surroundings in the normal way, and the user's eye also receives light from the head up display system. An image from the head up display is thus overlaid on the actual surroundings.

The transparent component of a head up display may be either mounted in a fixed position on equipment being used by a user (for example the cockpit of an aircraft), or on the head of the user (for example as a pair of spectacles, or on a helmet) such that the component moves with the user's head and thus remains at a fixed location in relation to the user's eye.

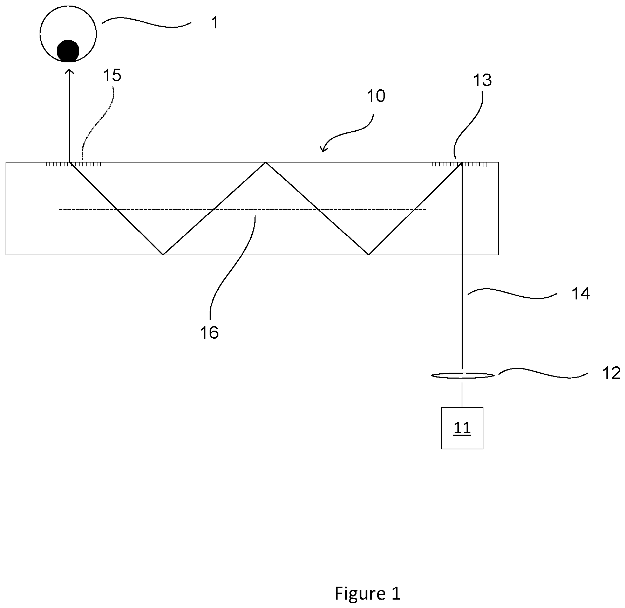

A fundamental requirement of a head up display is to couple light from an image source to the location required for viewing by the user, known as the output pupil. This may be accomplished utilising a waveguide system as shown schematically in cross section in Figure 1.

Image projection system 11, 12 projects an image into waveguide 10 which couples the image to a user's eye 1 positioned at the output pupil of the system. Waveguide body 10 is optically transmissive such that the user views the real world through the waveguide and the image from the projection system 11, 12 is overlaid onto that view.

The projector optics 12 are arranged to distribute the projected image over an input pupil of the waveguide. The near-field at that pupil represents the spatial distribution of light across the pupil, while the far field represents the image information (each pixel of the image is represented by a discrete ray angle). It is desirable for the image displayed to the user (i.e at the output pupil) to be focussed a long way from the eye (infinity), since this is the likely focus distance of the real world image onto which the projected image is overlaid.

Input grating 13 couples the ray 14 into waveguide body 10. Input grating 13 may be a diffractive grating which diffracts ray 14 to an angle at which it is trapped within the waveguide 10 by total internal reflection. Output grating 15 diffracts light back to its original angles such that it exits the waveguide and propagates to an exit pupil positioned to coincide with the location of eye 1. The output grating 15 may also be a diffractive grating. Waveguide 10 and the input and output gratings 13, 15 are configured to preserve ray direction between the input and output pupils to preserve chromatic and angular image information. That is, the far field of the light at the output pupil matches the far field at the input pupil. Other coupling structures for the input grating 13 and output grating 15 may be utilised, as is known in this technical field.

For clarity in the figures a single ray 14 is shown, but as will be appreciated this is representative of rays at a range of angles. The input light is also spatially distributed and hence ray 14 also represents rays distributed over the exit pupil generated by image projection system 11, 12.

To allow for flexibility in the alignment of the user's eye with the device, the output pupil generated by waveguide 10 should be large enough such that the entire field of view can be seen from a range of locations known as the "eyebox". For example, an output pupil of greater than 10mm diameter may be desirable. The waveguide system may be designed to expand the input pupil such that the output pupil is larger than the input pupil, thus reducing the input pupil requirements of the image projection system 11, 12. This expansion is commonly known as pupil replication. The expansion should be performed while preserving the far field and maintaining a constant luminance across the near field.

This expansion may be achieved utilising both diffractive structures 15 and 16 in the waveguide 10. The pupil expansion may be provided in either one dimension or two perpendicular dimensions of the pupil, using techniques known in the art.

Pupil expansion in two dimensions presents more of a design challenge than one dimensional expansion. Achieving a uniform illumination across the near-field of the output pupil with 2 dimensional expansion can be difficult, particularly over a large chromatic range, and requires precise design and manufacturing of the waveguide optics.

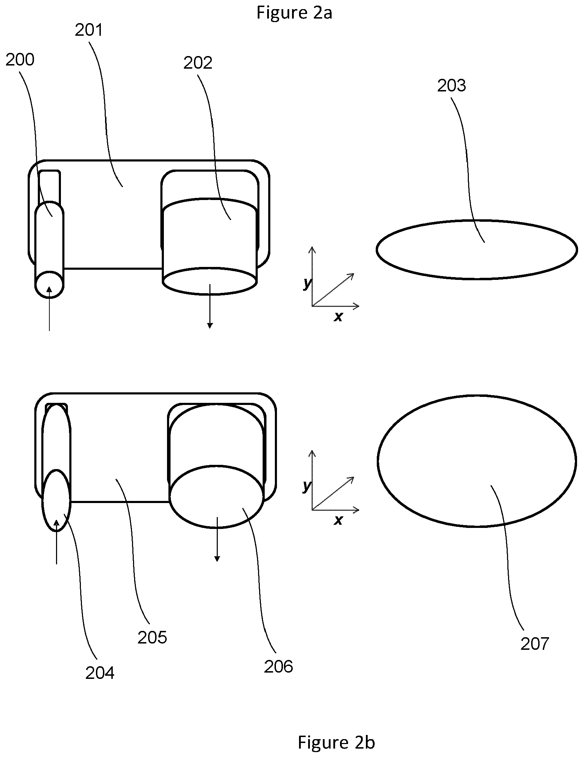

In contrast single dimension expansion is more straightforward, but limits the available exit pupil size in one dimension to that provided by the projection source. Figure 2a shows a schematic diagram of an input pupil 200 being expanded in a waveguide 201 in only one dimension. The output pupil 202 has been expanded in the x-direction, but in the y-direction the pupil size is maintained, leading to asymmetric eye box 203. As a consequence when combining a single dimension expansion waveguide with a projection device, the exit pupil provided by the projector should typically be larger in the orthogonal axis to the waveguides expansion, as shown in Figure 2b for input pupil 204, waveguide 205 for 2D expansion, and output pupil 206, providing symmetric eye box 207.

Reflective microdisplay devices can be used in conjunction with other complex optical elements that may be used to create a suitably large exit pupil, however such systems can become physically large and invoke a degradation in achievable image quality.

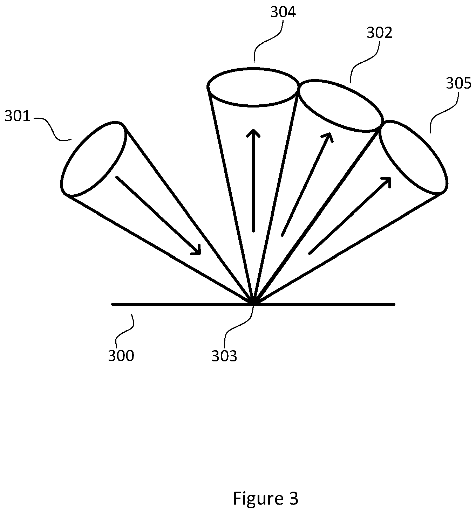

Figure 3 shows a schematic diagram of a single DMD mirror 300 illuminated by an input cone 301. The mirror is shown in the flat-state in which it produces an output cone 302. The mirror 300 tilts around an axis 303 perpendicular to the plane of the drawing. In the on-state the mirror 300 is tilted anti-clockwise to produce output cone 304. In the off-state the mirror tilts clockwise and produces an output cone 305. The style of DMD shown in Figure 3 is often known as a "diamond pixel" architecture. In other types of DMD each mirror is moveable about a point such that the mirror surface moves along multiple axes between states; such DMD devices are commonly known as "tilt and roll" devices.

Only the on-state output cone 304 should be collected by the image projection optics, and hence the output cone 304 should not overlap with the flat- and off-state output cones 302, 305. A typical mirror of a DMD device such as that of Figure 3 can tilt by +/-12°, meaning that in order to avoid overlap between adjacent output cones the maximum illumination cone angle is 24° (+/-12°). Illumination of a DMD is across the total area of the micro-mirror device, which defines the Field of View achievable by the projection system. The illumination cone angle defines the pupil size of the projection system. That is, the projection optics after the DMD translate the spatial distribution of light into angular distribution (the far field) and the angular distribution into a spatial distribution such that an eye located at the output pupil sees the image created by the DMD.

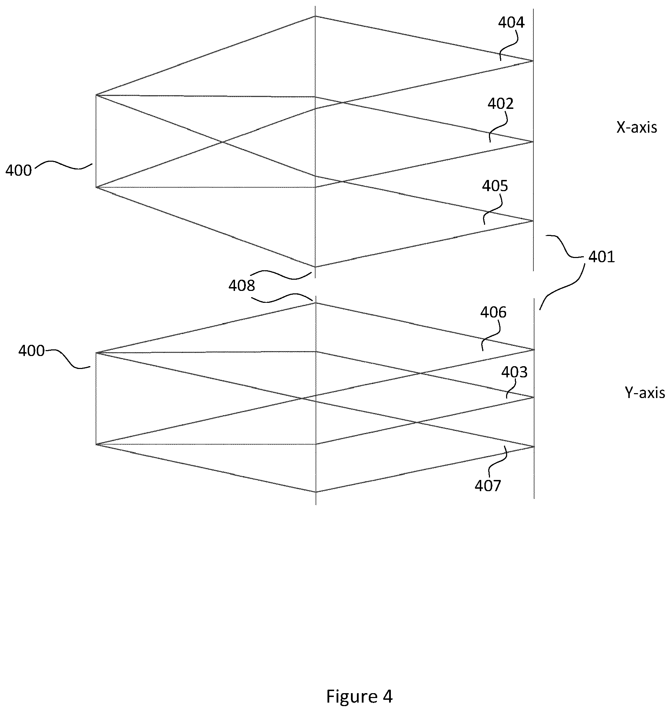

Figure 4 shows a paraxial design of a DMD-based image projector for creating an exit pupil 400. The DMD is represented at 401. The top half of the figure shows the X-axis of the DMD 401 (in which the device is larger) and the bottom half of the figure shows the Y-axis of the DMD 401 (in which the mirror array is smaller.

The DMD 401 is uniformly spatially illuminated with light over an angular illumination cone by a light source (not shown). Ray bundles 402 and 403 represent reflections from the central region of the 401, and ray bundles 404 - 407 represent reflections from the edges of the 401. The cone angle of bundles 402-407 corresponds to the cone angle of the illumination source at the DMD plane 401.

Paraxial lens system 408 focusses the light from the DMD to form an exit pupil 400.

In an example configuration the DMD array 401 may be 10mm x 6.25mm. An optical system may be designed to illuminate the whole DMD array 301 to consequently provide a 40° x 25° Field of View through the projection lens. Using the maximum illumination cone angle of 24° this provides an exit pupil 300 of 6mm diameter.

Using expansion in one dimension in the waveguide system limits the example system output pupil (eye box) to 6mm in the unexpanded dimension, which may be insufficient, thus necessitating two dimensional expansion.

There is therefore a requirement for an improved head up display system for providing a suitably sized output pupil.

The embodiments described below are not limited to implementations which solve any or all of the disadvantages of known systems.

### SUMMARY

This summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

There is provided an image projection apparatus for a head up display, the apparatus comprising a digital mirror device comprising a plurality of pivotable mirrors; an illumination source configured to illuminate the pivotable mirrors with incident light distributed spatially across the mirrors and angularly across an input cone; and an optical waveguide aligned such that light from the illumination source is coupled into the waveguide after reflection from the pivotable mirrors wherein the input cone is asymmetric and has a larger cone angle in an axis than the maximum tilt angle of the pivotable mirrors in that axis.

The pivotable mirrors may pivot on a single axis.

The pivotable mirrors may be four-sided in plan view and pivot about an axis between two vertices of the mirror perimeter.

The digital mirror device may be a diamond pixel device.

The input cone angle may be 24° along the axis orthogonal to the mirror pivot axis and may be greater than 24° along the axis parallel to the mirror pivot axis

The image projection apparatus for a head up display may further comprise a lens arrangement to project the output of the digital mirror device to an output pupil, wherein the output pupil is spatially asymmetric.

The image projection apparatus may project its output into a waveguide for coupling to an output pupil of the display.

The waveguide may expand the input pupil via pupil replication, to provide a larger exit pupil to a user.

The disclosure provided here may provide waveguides which are smaller and lighter than other waveguide designs, but which do not produce stray light paths.

### BRIEF DESCRIPTION OF THE DRAWINGS

Embodiments of the invention will be described, by way of example, with reference to the following drawings, in which:
Figure 1 shows a cross-section of a waveguide structure;
Figure 2 shows a schematic diagram of one and two dimension expansion;
Figure 3 shows a schematic diagram of reflections from a DMD mirror;
Figure 4 shows a paraxial projection system;
Figure 5 shows a schematic diagram of a DMD array;
Figure 6 shows a single mirror from a DMD array;
Figure 7 shows a single mirror from a DMD array with asymmetric illumination;
Figure 8 shows output pupils from a DMD mirror with asymmetric illumination; and
Figure 9 shows a paraxial projection system with asymmetric illumination.

### DETAILED DESCRIPTION

Further details, aspects and embodiments of the invention will now be described, by way of example only, with reference to the drawings. Elements in the figures are illustrated for simplicity and clarity and have not necessarily been drawn to scale. Like reference numerals have been included in the respective drawings to ease understanding.

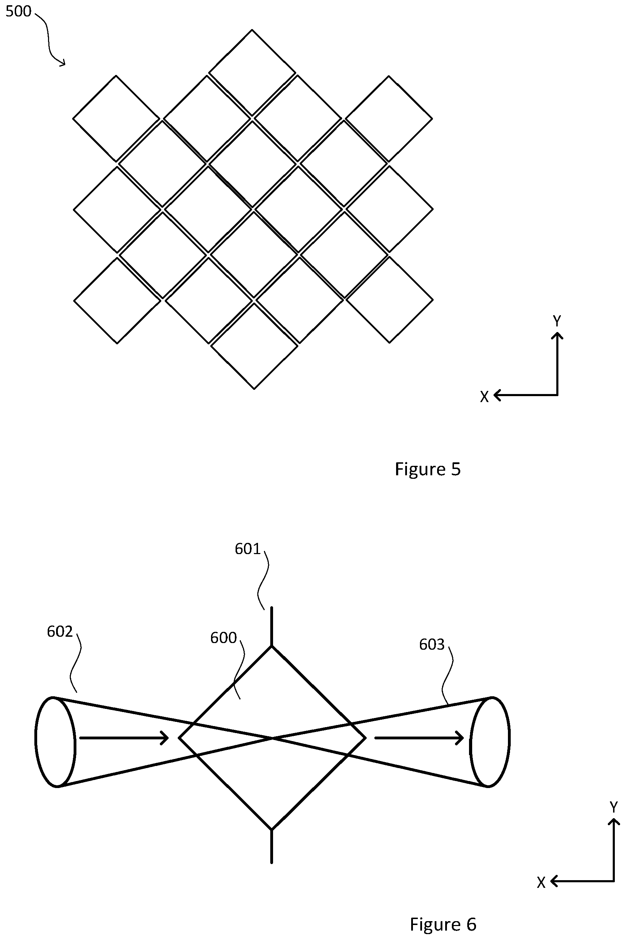

Figure 5 shows a plan view of a DMD array 500 in which the tilt axis of each mirror is about a corner-to-corner line of symmetry and in which the mirror tilts around a single axis. This type of DMD is an example of a type of device which may be used in the current disclosure, but other types of DMD array may also be utilised. For example, DMDs in which the mirrors pivot on a single axis, but with different alignment of the axis may be utilised, or DMDs in which the mirror pivots about more than one axis may be utilised. Figure 6 shows an enlarged view of a single mirror 600 and its pivot axis 601 along the Y-axis. The mirror 600 is illuminated by input cone 602 and cone 603 represents the output cone.

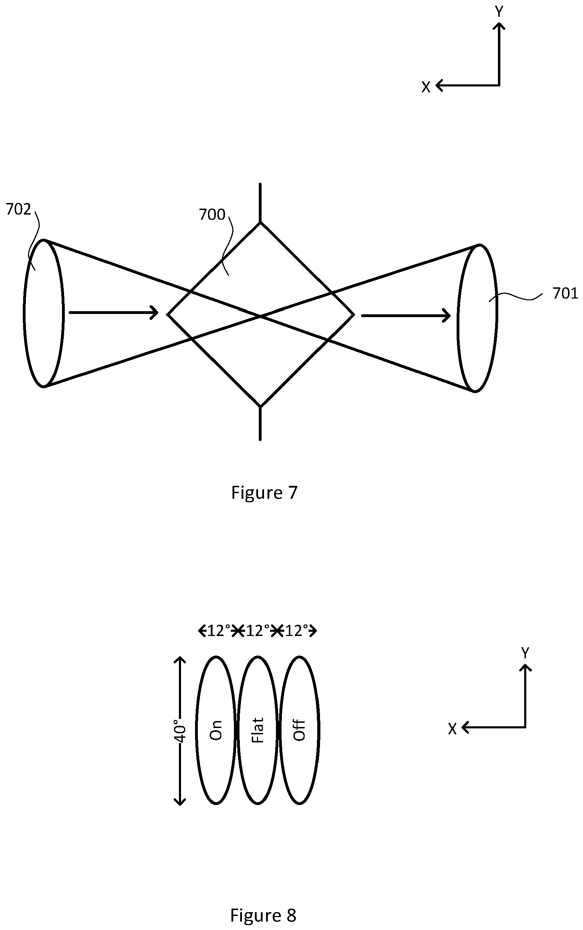

Figure 7 shows a schematic diagram of a single mirror 700 of an array illuminated to create an asymmetric output pupil 701. The input illumination cone 702 is arranged to be asymmetric. In the Z axis (out of the drawing plane) the input cone is constrained to the 24° described hereinbefore, such that there is no overlap between on/flat/off output cones. The illumination cone is asymmetric such that the cone angle parallel to the Y-axis is larger than the cone angle in the Z-axis. Due to the orientation of this configuration there is no requirement to angularly limit the output pupil size (other than depending on conventional optical design limitations). In an example configuration the illumination cone may be 24° x 40°. In general the cone angle in an axis may be larger than the maximum mirror tilt angle in that axis. In a specific example the mirror tilts around only one axis. Figure 8 shows the output pupils for each of the mirror states, showing the enlarged pupil in the Y-direction while maintaining a lack of interaction between states in the X-direction. In an example the mirrors pivot around the Y-axis of Figure 7, with no movement about other axes.

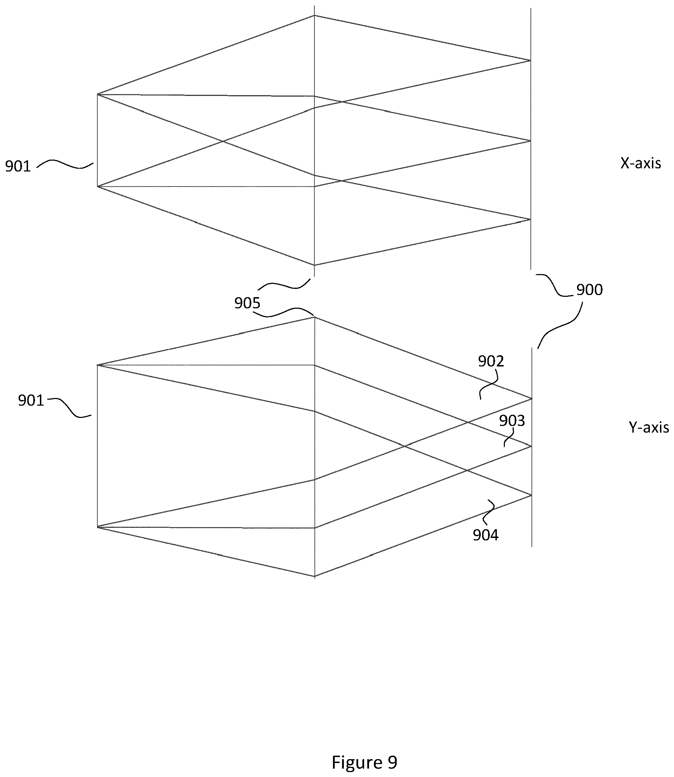

Figure 9 shows a paraxial system utilising the asymmetric illumination described above. The DMD device 900 has the same dimensions as described in relation to Figure 2 and the same Field of View of 40° x 25° is provided at output pupil 901. In the X-Axis the illumination angle is the same as described in relation to Figure 3, 24°, but in the Y-Axis exemplary ray bundles 902, 903, 904 have a larger cone angle, for example 40°. Paraxial projection system 905 provides a paraxial exit pupil 901 of 6mm x 10.25mm.

The asymmetric output pupil 901 of Figure 9 may be projected into a waveguide of a HUD for projection to the user. Expansion in only one dimension may be provided by the waveguide to provide an output pupil for the system of 20mm (expanded from 6mm) x 10.25mm. Expansion in only one dimension may thus provide an acceptable output pupil size. A DMD image source system (with the associated benefits in brightness) may thus be utilised in combination with one dimension expansion, thus obtaining the benefits of these technologies.

The above description has been given using an example DMD device with specific parameters. Those parameters are given for convenience of description only and the principles described herein apply to devices with different parameters.

In the above description a side-diamond device has been used as an example, However, other types of device in which the mirrors pivot may be utilised according to the same principles. Similarly square-shaped mirrors have been used as an example, but other shapes may also be utilised.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term 'comprising' does not exclude the presence of other elements or steps.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality. In the claims, the term 'comprising' or "including" does not exclude the presence of other elements.

## Claims

1. An image projection apparatus for a head up display, the apparatus comprising
a digital mirror device comprising a plurality of pivotable mirrors;
an illumination source configured to illuminate the pivotable mirrors with incident light distributed spatially across the mirrors and angularly across an input cone; and
an optical waveguide aligned such that light from the illumination source is coupled into the waveguide after reflection from the pivotable mirrors
wherein the input cone is asymmetric and has a larger cone angle in an axis than the maximum tilt angle of the pivotable mirrors in that axis.

2. An image projection apparatus for a head up display according to claim 1, wherein the pivotable mirrors pivot on a single axis.

3. An image projection apparatus for a head up display according to claim 2 wherein the pivotable mirrors are four-sided in plan view and pivot about an axis between two vertices of the mirror perimeter.

4. An image projection apparatus for a head up display according to claim 3, wherein the digital mirror device is a diamond pixel device.

5. An image projection apparatus for a head up display according to any preceding claim, wherein the input cone angle is 24° along the axis orthogonal to the mirror pivot axis and greater than 24° along the axis parallel to the mirror pivot axis

6. An image projection apparatus for a head up display according to any preceding claim, further comprising a lens arrangement to project the output of the digital mirror device to an output pupil, wherein the output pupil is spatially asymmetric.

7. A head up display comprising an image projection apparatus according to any preceding claim, wherein the waveguide expands the exit pupil created by the digital mirror device illumination in one axis.

8. A head up display according to claim 1, wherein the waveguide expands the input pupil via pupil replication in a single dimension, to provide a larger exit pupil to a user.
